# FASCICULE DE BREVET EUROPEEN

(11) **EP 4 699 438 B1**
(45) Date de publication et mention de la délivrance du brevet: **22.07.2026**
(21) Numéro de dépôt: 25196934.1
(22) Date de dépôt: 20.08.2025
(51) Int. Cl.: A01K 1/015

(54) **EQUIPEMENT DE CONFORT, POUR LE CONFORT DES ANIMAUX DANS UNE ENCEINTE D' ÉLEVAGE**
KOMFORTEINRICHTUNG FÜR DEN KOMFORT VON TIEREN IN EINEM TIERZUCHTRAUM
COMFORT EQUIPMENT FOR ANIMAL COMFORT IN A BREEDING ENCLOSURE

(30) Priorité: 21.08.2024 FR 2409029
(43) Date de publication de la demande: 25.02.2026
(73) Titulaire: Group Elastoteck, 44850 Mouzeil (FR)
(72) Inventeur: BIORET, Jean-Vincent, 44390 PETIT MARS (FR)
(74) Mandataire: Jacobacci & Partners France

(56) Documents cités:
- EP-A1- 3 391 740
- EP-A1- 3 616 507
- EP-B1- 0 900 001
- EP-B1- 3 361 859
- US-A- 6 053 126
- US-A1- 2005 076 855

## Description

### Domaine technique de l'invention

La présente invention concerne le domaine technique des équipements de confort, pour le confort des animaux dans une enceinte d'élevage.

### Etat de la technique

Le confort des animaux constitue un paramètre déterminant dans le rendement d'un élevage.

Ce confort influence notamment la santé, la façon de s'alimenter, la prise alimentaire, la fertilité et la longévité des animaux.

A cet effet, de manière courante, en étable, les bovins se reposent individuellement dans des logettes, encore couramment appelées « free stall », dans lesquelles ils sont libres de se lever et de se coucher.

Lorsqu'ils effectuent ces mouvements, les animaux sont susceptibles de se blesser. C'est en particulier le cas lorsque la litière est constituée de paille recouvrant du béton, qui ne protège pas l'animal des risques de glissades.

Pour limiter ce type d'incident et les blessures qui en découlent, il est connu d'équiper le sol de ces logettes avec des matelas adaptés à améliorer le confort de couchage des animaux.

Ces matelas de confort comprennent, classiquement, au moins une bande élastique qui est apte à subir une déformation élastique, sous-jacente d'une surface supérieure sur laquelle un animal prend appui.

Dans ce contexte, il existe un besoin de système visant à favoriser le confort des animaux présents dans l'enceinte d'élevage, notamment lorsqu'ils se reposent au sein de leurs logettes.

EP 3 361 859 B1 divulgue un système pour le confort thermique des animaux, par exemple pour les bovins laitiers et les bovins à viande, en particulier pour l'aménagement de logettes dans une enceinte d'élevage, comprenant un matelas de confort comportant plusieurs cavités étanches destinées à contenir un fluide caloporteur.

### Présentation de l'invention

Afin de remédier à l'inconvénient précité de l'état de la technique, la présente invention propose un équipement de confort, pour le confort des animaux dans une enceinte d'élevage.

Cet équipement de confort comprend un matelas de confort, et au moins une sous-couche élastomère destinée à être implantée sous ledit matelas de confort.

Le matelas de confort est délimité par deux couples de bords, à savoir deux bords longitudinaux et deux bords transversaux.

Le matelas de confort comporte encore deux faces opposées :
- une face supérieure, apte à subir une déformation élastique et sur laquelle les animaux sont destinés à prendre appui, et
- une face inférieure, orientée vers le sol,

Le matelas de confort comporte plusieurs zones d'accueil qui sont juxtaposées sur la longueur dudit matelas de confort,
lequel matelas de confort comprend au moins une cavité étanche, au niveau de chaque zone d'accueil, qui est délimitée par deux feuilles longitudinales :
   - une feuille longitudinale supérieure, destinée à former ladite face supérieure du matelas de confort, et
   - une feuille longitudinale inférieure, destinée à former ladite face inférieure du matelas de confort,
laquelle au moins une cavité étanche est destinée à être remplie avec un fluide caloporteur.

Le matelas de confort selon l'invention offre plusieurs avantages pour le confort des animaux d'élevage, notamment les vaches laitières :
- réduction du stress thermique : le matelas de confort selon l'invention aide les vaches à réguler leur température corporelle, ce qui est crucial pendant les périodes de fortes chaleurs. Il permet une réduction de 1 à 2 points de l'indice de stress thermique (THI), aidant ainsi à améliorer le bien-être des animaux et leur production laitière ;
- amélioration de la circulation sanguine : en réduisant tous les points de pression, le matelas permet une circulation sanguine optimale, ce qui contribue à la santé générale des animaux ;
- élimination efficace des calories : grâce à une surface de contact élevée, les vaches peuvent éliminer plus facilement leurs calories excédentaires, ce qui contribue à leur confort thermique :
   D'autres caractéristiques non limitatives et avantageuses du produit conforme à l'invention, prises individuellement ou selon toutes les combinaisons techniquement possibles, sont les suivantes :
   - le fluide caloporteur est choisi parmi l'eau, un gaz ou un gel ;
   - ledit matelas de confort est continu ;
   - ledit matelas de confort comporte une cote en largeur, mesurée entre les bords longitudinaux, allant de 1 200 à 2 200 mm, et une cote en longueur, mesurée entre les bords transversaux, allant de 2 m à 250 m ;
   - les deux feuilles longitudinales sont assemblées hermétiquement sur le pourtour de chaque cavité étanche ;
   - chaque cavité étanche est raccordé à un conduit de remplissage ;
   - chaque feuille longitudinale est réalisée dans au moins un matériau apte à subir une déformation élastique, dit encore « matériau élastique », choisi parmi les matériaux élastomères, à savoir par exemple le caoutchouc naturel, le caoutchouc « naturel synthétique » (ou poly-isoprène synthétique), le polybutadiène ou le styrène-butadiène, ou les matériaux plastiques ou élastomères thermoplastiques (TPE), à savoir par exemple le PVB (polyvinyle de butyral), ABS (acrylonitrile butadiène styrène) / SBR (styrène-butadiène), PP (polypropylène) / EPDM (éthylène-propylène-diène monomère), TPU (TPE de polyuréthane) ;
   - chaque feuille longitudinale contient au moins une sous-couche de renfort ;
   - chaque feuille longitudinale présente une épaisseur allant de 0,5 à 4 mm ;
   - ledit matelas de confort se présente sous la forme d'un rouleau, sans fin, coupé à longueur ;
   - l'équipement de confort comprend une genouillère ;
   - ladite au moins une sous-couche élastomère comprend par exemple une épaisseur allant de 30 à 40 mm, avec une densité de 250 à 350 kg/m3, de préférence enveloppée dans un film PVC ;
   - il comprend des moyens de solidarisation pour la solidarisation dudit matelas de confort avec le sol, de préférence des moyens de solidarisation pour la solidarisation des bords longitudinaux avec le sol, par exemple sous la forme de barres d'ancrage.

La présente invention concerne également une enceinte équipée d'un équipement de confort selon l'invention.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue générale et en perspective de l'équipement de confort comportant un matelas de confort selon l'invention ;
[Fig. 2] est une vue en coupe de l'équipement de confort selon la figure 1.

Il est à noter que, sur ces figures, les éléments structurels et/ou fonctionnels communs aux différentes variantes peuvent présenter les mêmes références.

La présente invention concerne ainsi un équipement de confort, pour le confort des animaux dans une enceinte d'élevage E, comprenant :
- un matelas de confort 10, et
- au moins une sous-couche élastomère 20, destinée à être implantée sous ledit matelas de confort 10.

### Enceinte d'élevage

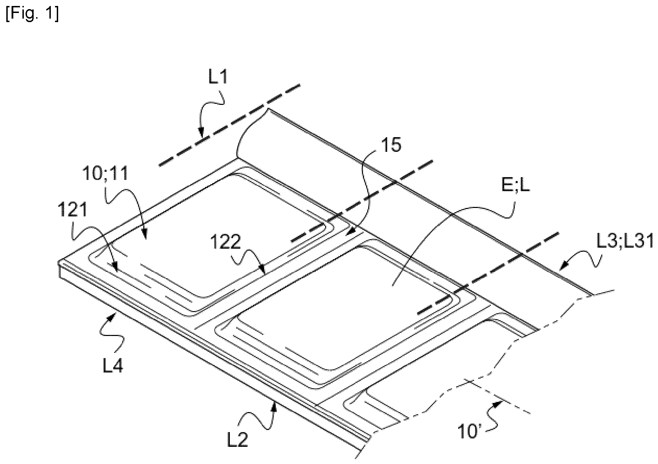

L'équipement de confort selon l'invention est destiné à équiper une enceinte d'élevage E dans laquelle sont ménagées des stalles de couchage (figure 1).

L'enceinte d'élevage E consiste avantageusement en une étable pour l'élevage de bovins, en particulier de bovins laitiers ou de bovins à viande.

Les stalles de couchage consistent par exemple en des logettes L, ménagées sur au moins une ligne.

Les logettes L constituent un compromis entre un couchage confortable pour le bovin, le respect du mouvement levé/couché, une station debout confortable et un minimum de souillures dans la logette.

Chaque logette L, classique en soi, est délimitée par :
- deux séparations latérales L1, par exemple des structures tubulaires,
- un seuil arrière de logette L2, s'étendant le long d'un couloir d'accès,
- une limite avant L3, comprenant avantageusement une barre haute au garrot, un arrêtoir inférieur (ou limiteur d'avancement) et une genouillère L31, formant le fond de la logette L, et
- un sol L4, par exemple une dalle de béton.

### Matelas de confort

Selon l'invention, le matelas de confort 10, de préférence de forme rectangulaire, est délimité par deux couples de bords, à savoir :
- deux bords longitudinaux 10a, s'étendant parallèlement à un axe longitudinale 10', et
- deux bords transversaux 10b, s'étendant perpendiculairement à ce même axe longitudinal 10'.

En pratique, les bords longitudinaux 10a sont destinés à s'étendre parallèlement au seuil arrière L2 et à la limite avant L3 de la ligne de logettes L. Les bords transversaux 1b sont destinés à se situer au niveau des séparations latérales L1 des deux logettes L en bout de ligne.

De préférence, ce matelas de confort 10 comporte :
- une cote en largeur, mesurée entre les bords longitudinaux 10a, allant de 1 200 à 2 200 mm, et
- une cote en longueur, mesurée entre les bords transversaux 10b, allant de 2 m à 250 m.

De manière générale, ce matelas de confort 10 est continu (en particulier dans le sens de la longueur).

De préférence, ledit matelas de confort 10 se présente sous la forme d'un rouleau, sans fin, coupé à longueur.

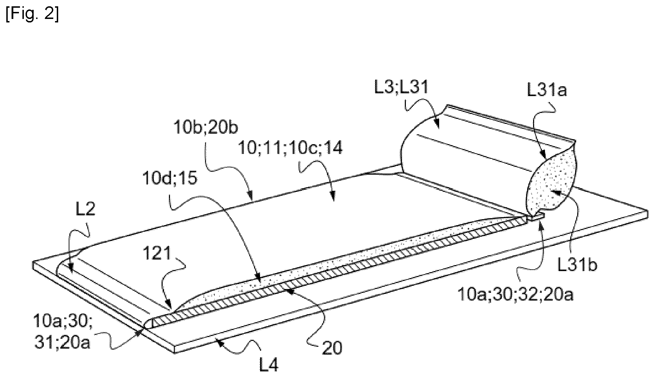

Comme illustré par la figure 2, ce matelas de confort 10 comporte encore deux faces opposées :
- une face supérieure 10c, apte à subir une déformation élastique et sur laquelle les animaux sont destinés à prendre appui, et
- une face inférieure 10d, orientée vers le sol et formant une surface d'appui.

Le matelas de confort 10 comporte plusieurs zones d'accueil 11 qui sont juxtaposées sur la longueur du matelas de confort 10.

Et, toujours selon l'invention, ce matelas de confort 10 comprend au moins une cavité étanche 12 (de préférence une seule cavité étanche 12), au niveau de chaque zone d'accueil 11.

Et ladite au moins une cavité étanche 12 est destinée à être remplie avec un fluide caloporteur. De préférence, le fluide caloporteur est choisi parmi l'eau, un gaz ou un gel.

De préférence, chaque cavité étanche 12 comporte un contour rectangulaire, avec :
- deux bordures longitudinales 121, longeant ici les bords longitudinaux 10a, et
- deux bordures transversales 122, parallèles ici aux bords transversaux 10b.

Deux cavités étanches 12 sont avantageusement séparées par une bande transversale 15, hermétique.

De préférence, lorsque ladite au moins une chambre étanche 12 est remplie, l'épaisseur finale est avantageusement comprise entre 10 mm et 150 mm, de préférence entre 10 et 100 mm.

De préférence, chaque cavité étanche 12 est raccordé fluidiquement à un conduit de remplissage (non représentée).

Chaque conduit de remplissage comporte deux extrémités :
- une extrémité extérieure, débouchant le long d'un bord longitudinal 10a, et
- une extrémité intérieure, débouchant au sein d'une cavité étanche 12.

Ce conduit de remplissage est notamment utile pour son remplissage et/ou sa vidange, par exemple sous la forme d'un orifice équipé d'une valve.

La valve est par exemple raccordée de manière étanche, par exemple via un sertissage métallique (dite encore « valve passe paroi »).

Chaque cavité étanche 12 est délimitée par deux feuilles longitudinales :
- une feuille longitudinale supérieure 14, destinée à former la face supérieure 10c du matelas de confort 10, et
- une feuille longitudinale inférieure 15, destinée à former la face inférieure 10d du matelas de confort 10.

En d'autres termes, le matelas de confort 10 est formé par deux feuilles longitudinales 14, 15 qui sont assemblées hermétiquement pour former les cavités étanches 12.

Pour cela, les deux feuilles longitudinales 14, 15 sont avantageusement assemblées hermétiquement sur le pourtour de chaque cavité étanche 12.

De préférence, chaque feuille longitudinale 14, 15 est réalisée dans au moins un matériau apte à subir une déformation élastique, dit encore « matériau élastique », choisi parmi :
- les matériaux élastomères, à savoir par exemple le caoutchouc naturel, le caoutchouc « naturel synthétique » (ou poly-isoprène synthétique), le polybutadiène ou le styrène-butadiène, ou
- les matériaux plastiques ou élastomères thermoplastiques (TPE), à savoir par exemple le PVB (polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

De préférence, chaque feuille longitudinale 14, 15 contient au moins une sous-couche de renfort (non représentée).

Cette sous-couche de renfort est choisie par exemple parmi tout produit apportant la stabilité et/ou la résistance à l'élongation, notamment les fibres textiles, les fibres de métal.

Ces sous-couches de renfort consistent par exemple en une armature textile servant de renfort, réalisée avantageusement en un matériau choisi parmi le nylon, le coton, le polyester, le polyamide ou tout autre textile de renfort.

Encore de préférence, chaque feuille longitudinale 14, 15 présente une épaisseur allant de 0,5 à 4 mm.

### Sous-couche élastomère

Ladite au moins une sous-couche élastomère 20 consiste par exemple en une mousse latex.

La sous-couche élastomère 20 présente par exemple l'une au moins des caractéristiques techniques suivantes :
- une épaisseur allant de 30 à 40 mm,
- une densité de 250 à 350 kg/m3,
- enveloppée dans un film PVC.

De préférence, ladite au moins une sous-couche élastomère 20 est constituée de plusieurs plaques juxtaposées, de préférence parallélépipédique, qui présentent par exemple :
- une cote en largeur, mesurée parallèlement aux bords longitudinaux 10a du matelas de confort 10, allant de 1 200 à 2 200 mm, et
- une cote en longueur, mesurée parallèlement aux bords transversaux 10b du matelas de confort, allant de 1 m à 2 m.

La sous-couche élastomère 20, de préférence parallélépipédique, est avantageusement délimitée par deux couples de bords, à savoir :
- deux bords longitudinaux 20a, s'étendant parallèlement à un axe longitudinale 10', et
- deux bords transversaux 20b, s'étendant perpendiculairement à ce même axe longitudinal 10'.

### Genouillère

L'équipement de confort peut comporter encore une genouillère L31, décrite par exemple dans le document EP3558673.

Cette genouillère L31 consiste par exemple en un dispositif tubulaire souple comprenant une pièce monobloc comportant une paroi tubulaire L31a qui délimite une chambre étanche L31b destinée à être remplie avec un fluide.

De préférence, la paroi tubulaire L31a comprend une matrice élastomère dans laquelle est intégré au moins un pli de renfort (non représenté).

### Moyens de solidarisation

De préférence, l'équipement de confort comprend des moyens de solidarisation 30 pour la solidarisation du matelas de confort 10 avec le sol.

De préférence, les moyens de solidarisation 30 consistent en des moyens de solidarisation 30 pour la solidarisation des bords longitudinaux 10a de ce matelas de confort 10 avec le sol, par exemple sous la forme de barres d'ancrage (dites encore « profilés de fixation »).

Les moyens de solidarisation 30 comportent alors avantageusement deux barres d'ancrage 31, 32 qui sont chacune adaptées à la solidarisation de l'un des bords longitudinaux 10a.

De préférence, les barres d'ancrage 31, 32 sont solidarisées avec le sol par l'intermédiaire de pièces de quincaillerie (par exemple des vis ou des pointes).

Les bords longitudinaux 10a sont avantageusement solidarisés avec le sol, de part et d'autre de la sous-couche élastomère 20.

La cote en largeur du matelas de confort 10 est avantageusement supérieure à la cote en largeur de la sous-couche élastomère 20.

De manière générale et de préférence, le matelas de confort 10 est fixé à l'avant et à l'arrière avec les barres d'ancrage 30. Cette solidarisation assure une enveloppe quasi-hermétique autour de la sous-couche élastomère 20, ce qui stabilise l'équipement de confort et permet une maintenance / hygiène optimale.

Par exemple, chaque barre d'ancrage 30 présente les cotes suivantes :
- une largeur allant de 20 à 50 mm, et
- une épaisseur allant de 10 à 20 mm.

### Procédé de pose

Ladite au moins une sous-couche élastomère 20 est posée sur le sol L4, puis recouverte par ledit au moins un matelas de confort 2.

De préférence, le matelas de confort 2, sous forme de rouleau, est déroulé le long des logettes L.

Le matelas de confort 2 est ajusté longitudinalement de sorte que chaque zone d'accueil 11 soit positionnée au sein d'une logette L.

Ce matelas de confort 2 est avantageusement fixé dans le sol L4, par exemple au moyen de profilés de fixation 30.

En particulier, chaque bord longitudinal 10a est recourbé autour d'une barre d'ancrage 30, avec une bande retour qui est prise en sandwich entre cette barre d'ancrage 30 et le sol.

Le cas échéant, une genouillère L31 est rapporté le long de la limite avant L3.

Les cavités étanches 12 du matelas de confort 2, et le cas échéant la genouillère L31, sont ensuite remplies.

Bien entendu, diverses autres modifications peuvent être apportées à l'invention dans le cadre des revendications annexées.

## Revendications

1. Equipement de confort, pour le confort des animaux dans une enceinte d'élevage (E), comprenant :
- un matelas de confort (10),
lequel matelas de confort (10) est délimité par deux couples de bords, à savoir deux bords longitudinaux (10a) et deux bords transversaux (10b),
lequel matelas de confort (10) comporte encore deux faces opposées :
- une face supérieure (10c), apte à subir une déformation élastique et sur laquelle les animaux sont destinés à prendre appui, et
- une face inférieure (10d), orientée vers le sol,
lequel matelas de confort (10) comporte plusieurs zones d'accueil (11) qui sont juxtaposées sur la longueur dudit matelas de confort (10),
lequel matelas de confort (10) comprend au moins une cavité étanche (12), au niveau de chaque zone d'accueil (11), qui est délimitée par deux feuilles longitudinales (14, 15) :
- une feuille longitudinale supérieure (14), destinée à former ladite face supérieure (10c) du matelas de confort (10), et
- une feuille longitudinale inférieure (15), destinée à former ladite face inférieure (10d) du matelas de confort (10),
laquelle au moins une cavité étanche (12) est destinée à être remplie avec un fluide caloporteur, **caractérisé en ce que**
l'équipement de confort comporte également au moins une sous-couche élastomère (20), destinée à être implantée sous ledit matelas de confort (10).

2. Equipement de confort selon la revendication 1, **caractérisé en ce que** le fluide caloporteur est choisi parmi l'eau, un gaz ou un gel.

3. Equipement de confort selon l'une quelconque des revendications 1 ou 2, **caractérisé en ce que** ledit matelas de confort (10) est continu.

4. Equipement de confort selon l'une quelconque des revendications 1 à 3, **caractérisé en ce que** ledit matelas de confort (10) comporte :
- une cote en largeur, mesurée entre les bords longitudinaux (10a), allant de 1 200 à 2 200 mm, et
- une cote en longueur, mesurée entre les bords transversaux (10b), allant de 2 m à 250 m.

5. Equipement de confort selon l'une quelconque des revendications 1 à 4, **caractérisé en ce que** les deux feuilles longitudinales (14, 15) sont assemblées hermétiquement sur le pourtour de chaque cavité étanche (12).

6. Equipement de confort selon l'une quelconque des revendications 1 à 5, **caractérisé en ce que** chaque cavité étanche (12) est raccordé à un conduit de remplissage.

7. Equipement de confort selon l'une quelconque des revendications 1 à 6, **caractérisé en ce que** chaque feuille longitudinale (14, 15) est réalisée dans au moins un matériau apte à subir une déformation élastique, dit encore « matériau élastique », choisi parmi les matériaux élastomères, ou les matériaux plastiques ou élastomères thermoplastiques (TPE).

8. Equipement de confort selon l'une quelconque des revendications 1 à 7, **caractérisé en ce que** chaque feuille longitudinale (14, 15) contient au moins une sous-couche de renfort.

9. Equipement de confort selon l'une quelconque des revendications 1 à 8, **caractérisé en ce que** chaque feuille longitudinale (14, 15) présente une épaisseur allant de 0,5 à 4 mm.

10. Equipement de confort selon l'une quelconque des revendications 1 à 9, **caractérisé en ce que** ledit matelas de confort (10) se présente sous la forme d'un rouleau, sans fin, coupé à longueur.

11. Equipement de confort selon l'une quelconque des revendications 1 à 10, **caractérisé en ce qu'**il comprend une genouillère (L31).

12. Equipement de confort selon l'une quelconque des revendications 1 à 11, **caractérisé en ce qu'**il comprend des moyens de solidarisation (30) pour la solidarisation dudit matelas de confort (10) avec le sol, de préférence des moyens de solidarisation (30) pour la solidarisation des bords longitudinaux (10a) avec le sol, par exemple sous la forme de barres d'ancrage.

13. Enceinte équipée d'un équipement de confort selon l'une quelconque des revendications 1 à 12.

## Patentansprüche

1. Komforteinrichtung für den Komfort von Tieren in einem Tierzuchtraum (E) mit:
- einer Komfortmatratze (10),
wobei die Komfortmatratze (10) durch zwei Paar Ränder begrenzt ist, und zwar zwei Längsränder (10a) und zwei Querränder (10b),
wobei die Komfortmatratze (10) außerdem zwei voneinander abgewandte Seiten aufweist:
- eine Oberseite (10c), die eine elastische Verformung ertragen kann und auf der die Tiere aufliegen sollen, und
- eine zum Boden hin gerichtete Unterseite (10d),
wobei die Komfortmatratze (10) mehrere Aufnahmebereiche (11) aufweist, die über die Länge der Komfortmatratze (10) verteilt nebeneinander liegen,
wobei die Komfortmatratze (10) bei jedem Aufnahmebereich (11) eine dichte Aushöhlung (12) aufweist, die durch zwei Längsfolien (14, 15) begrenzt ist:
- eine obere Längsfolie (14), die dazu bestimmt ist, die Oberseite (10c) der Komfortmatratze (10) zu bilden, und
- eine untere Längsfolie (15), die dazu bestimmt ist, die Unterseite (10d) der Komfortmatratze (10) zu bilden,
wobei die mindestens eine dichte Aushöhlung (12) dazu bestimmt ist, mit einem Kühlfluid gefüllt zu werden,
**dadurch gekennzeichnet, daß** die Komforteinrichtung auch mindestens eine Elastomerunterschicht (20) aufweist, die dazu bestimmt ist, unter der Komfortmatratze (10) eingesetzt zu werden.

2. Komforteinrichtung gemäß Anspruch 1, **dadurch gekennzeichnet, daß** das Kühlfluid aus Wasser, einem Gas oder einem Gel ausgewählt ist.

3. Komforteinrichtung gemäß einem der Ansprüche 1 oder 2, **dadurch gekennzeichnet, daß** die Komfortmatratze (10) durchgehend ist.

4. Komforteinrichtung gemäß einem der Ansprüche 1 bis 3, **dadurch gekennzeichnet, daß** die Komfortmatratze (10)
- ein zwischen den Längsrändern (10a) gemessenes Breitenmaß von 1200 bis 2200 mm und
- ein zwischen den Querrändern (10b) gemessenes Längsmaß von 2 m bis 250 m aufweist.

5. Komforteinrichtung gemäß einem der Ansprüche 1 bis 4, **dadurch gekennzeichnet, daß** die beiden Längsfolien (14, 15) am Umfang jeder dichten Aushöhlung (12) hermetisch zusammengefügt sind.

6. Komforteinrichtung gemäß einem der Ansprüche 1 bis 5, **dadurch gekennzeichnet, daß** jede dichte Aushöhlung (12) an eine Auffülleitung angeschlossen ist.

7. Komforteinrichtung gemäß einem der Ansprüche 1 bis 6, **dadurch gekennzeichnet, daß** jede Längsfolie (14, 15) aus mindestens einem Material hergestellt ist, das geeignet ist, eine elastische Verformung zu vertragen, auch als "elastisches Material" bezeichnet, das aus den elastomeren Materialien, oder den plastischen Materialien oder thermoplastischen Elastomeren (TPE) ausgewählt ist.

8. Komforteinrichtung gemäß einem der Ansprüche 1 bis 7, **dadurch gekennzeichnet, daß** jede Längsfolie (14, 15) mindestens eine Verstärkungsunterschicht aufweist.

9. Komforteinrichtung gemäß einem der Ansprüche 1 bis 8, **dadurch gekennzeichnet, daß** jede Längsfolie (14, 15) eine Dicke von 0,5 bis 4 mm aufweist.

10. Komforteinrichtung gemäß einem der Ansprüche 1 bis 9, **dadurch gekennzeichnet, daß** die Komfortmatratze (10) in Form einer Endlosrolle vorliegt, die auf Länge geschnitten wird.

11. Komforteinrichtung gemäß einem der Ansprüche 1 bis 10, **dadurch gekennzeichnet, daß** sie einen Knieschutz (L31) aufweist.

12. Komforteinrichtung gemäß einem der Ansprüche 1 bis 11, **dadurch gekennzeichnet, daß** sie Befestigungsmittel (30) für die Befestigung der Komfortmatratze (10) auf dem Boden, vorzugsweise Befestigungsmittel (30) für die Befestigung der Längsränder (10a) auf dem Boden, zum Beispiel in Form von Verankerungsstangen, aufweist.

13. Raum mit einer Komforteinrichtung gemäß einem der Ansprüche 1 bis 12.

## Claims

1. A comfort equipment, for the comfort of animals in a farming enclosure (E), comprising:
- a comfort mattress (10),
which comfort mattress (10) is delimited by two pairs of edges, namely two longitudinal edges (10a) and two transverse edges (10b),
which comfort mattress (10) also includes two opposite faces:
- an upper face (10c), capable of undergoing elastic deformation and on which the animals are intended to rest, and
- a lower face (10d), oriented towards the ground,
wherein the comfort mattress (10) includes a plurality of accommodating zones (11) which are juxtaposed along the length of said comfort mattress (10),
wherein the comfort mattress (10) comprises at least one sealed cavity (12), at each accommodating zone (11), which is delimited by two longitudinal sheets (14, 15):
- an upper longitudinal sheet (14), to form said upper face (10c) of the comfort mattress (10), and
- a lower longitudinal sheet (15), to form said lower face (10d) of the comfort mattress (10),
wherein at least one sealed cavity (12) is to be filled with a heat transfer fluid, **characterised in that**
the comfort equipment also includes at least one elastomeric sub-layer (20), to be implanted under said comfort mattress (10).

2. The comfort equipment according to claim 1, **characterised in that** the heat transfer fluid is selected from water, a gas or a gel.

3. The comfort equipment according to any one of claims 1 or 2, **characterised in that** said comfort mattress (10) is continuous.

4. The comfort equipment according to any one of claims 1 to 3, **characterised in that** said comfort mattress (10) includes:
- a width dimension, measured between the longitudinal edges (10a), ranging from 1,200 to 2,200 mm, and
- a length dimension, measured between the transverse edges (10b), ranging from 2 m to 250 m.

5. The comfort equipment according to any one of claims 1 to 4, **characterised in that** the two longitudinal sheets (14, 15) are hermetically assembled on the perimeter of each sealed cavity (12).

6. The comfort equipment according to any one of claims 1 to 5, **characterised in that** each sealed cavity (12) is connected to a filling duct.

7. The comfort equipment according to any one of claims 1 to 6, **characterised in that** each longitudinal sheet (14, 15) is made of at least one material capable of undergoing elastic deformation, also referred to as "elastic material", selected from elastomeric materials, or plastic materials or thermoplastic elastomers (TPE).

8. The comfort equipment according to any one of claims 1 to 7, **characterised in that** each longitudinal sheet (14, 15) contains at least one reinforcement sub-layer.

9. The comfort equipment according to any one of claims 1 to 8, **characterised in that** each longitudinal sheet (14, 15) has a thickness ranging from 0.5 to 4 mm.

10. The comfort equipment according to any one of claims 1 to 9, **characterised in that** said comfort mattress (10) is in the form of an endless roll cut to length.

11. The comfort equipment according to any one of claims 1 to 10, **characterised in that** it comprises a knee rail (L31).

12. The comfort equipment according to any one of claims 1 to 11, **characterised in that** it comprises securing means (30) for securing said comfort mattress (10) to the ground, preferably securing means (30) for securing the longitudinal edges (10a) to the ground, for example in the form of anchor bars.

13. Enclosure equipped with the comfort equipment according to any one of claims 1 to 12.
